# EUROPÄISCHE PATENTSCHRIFT

(11) **EP 2 231 539 B1**
(45) Veröffentlichungstag und Bekanntmachung des Hinweises auf die Patenterteilung: **13.04.2016**
(21) Anmeldenummer: 08856232.7
(22) Anmeldetag: 05.12.2008
(51) Int. Cl.: C03C 17/34, G02B 1/11, G02B 1/111, G02B 1/113

(54) **SUBSTRAT MIT EINER SOL-GEL-SCHICHT UND VERFAHREN ZUR HERSTELLUNG EINES VERBUNDMATERIALS**
SUBSTRATE HAVING A SOL-GEL LAYER, AND METHOD FOR THE PRODUCTION OF A COMPOSITE MATERIAL
SUBSTRAT DOTÉ D'UNE COUCHE SOL-GEL ET PROCÉDÉ DE FABRICATION D'UN MATÉRIAU COMPOSITE

(30) Priorität: 05.12.2007 DE 102007058926; 05.12.2007 DE 102007058927
(43) Veröffentlichungstag der Anmeldung: 29.09.2010
(73) Patentinhaber: Schott AG, 55122 Mainz (DE)
(72) Erfinder: RÖMER-SCHEUERMANN, Gabriele, 55218 Ingelheim (DE); WEBER, Gerhard, 55234 Bechenheim (DE); HENZE, Inka, 55268 Nieder-Olm (DE); SCHUHMACHER, Jörg, 70806 Kornwestheim (DE); BAUER, Stefan, 55232 Alzey (DE); ENGELMANN, Harry, 55218 Ingelheim (DE); KRZYZAK, Marta, 31061 Alfeld (DE); WESTENBERGER, Irmgard, 55126 Mainz (DE); ZACHMANN, Peter, 67574 Osthofen (DE)
(74) Vertreter: Blumbach Zinngrebe
(86) Internationale Anmeldenummer: PCT/EP2008/010349
(87) Internationale Veröffentlichungsnummer: WO 2009/071317

(56) Entgegenhaltungen:
- Z. QINGNA, D.YUHONG, W. PENG, Z. XIUJIAN: "CeO2-TiO2/SiO2 anti-reflecting and UV-shielding double-functional films coated on glass substrates using sol-gel method" JOURNAL OF RARE EARTH, Bd. 25, Juni 2007 (2007-06), Seiten 64-67, XP022934129
- J. C. DEBSIKDAR: "Deposition of gradient-index antireflective coating: An approach based on ultrastructure processing" JOURNAL OF NON-CRYSTALLINE SOLIDS, Bd. 91, 1987, Seiten 262-270, XP008103090

## Beschreibung

### Gebiet der Erfindung:

Die Erfindung betrifft ein Substrat mit einer Sol-Gel-Schicht, ein Verbundmaterial, sowie ein Verfahren zur Herstellung eines Verbundmaterials. Insbesondere betrifft die Erfindung ein Glassubstrat mit einer porösen Einschicht-Entspiegelungsschicht.

### Hintergrund der Erfindung:

Insbesondere in der Solartechnik spielt Glas als transparentes Material eine große Rolle. Durch den Unterschied des Brechungsindexes zwischen Luft und Glas kommt es an der Grenzfläche Glas-Luft allerdings durch Reflexion zu Einbußen in der Lichtausbeute. Es ist bekannt, durch eine Oberflächenbehandlung des Glases die Lichtausbeute zu erhöhen. Zu einer solchen Oberflächenbehandlung gehören insbesondere das Ätzen sowie die Beschichtung des Glases zur Entspiegelung des Glases. Da das Ätzen meist mit der Verwendung von gefährlichen Substanzen wie beispielsweise HF verbunden ist, werden bevorzugt Beschichtungen als Entspiegelung verwendet.

Dabei ist es wichtig, eine möglichst breitbandige Entspiegelung über das Sonnenspektrum bereit zu stellen. Weiterhin sollte die Entspiegelung auch für wechselnde Einfallswinkel, wie sie sich durch den wechselnden Sonnenstand ergeben, möglichst effizient sein. Es ist bekannt, dass dies insbesondere durch einschichtige Entspiegelungsschichten erreicht werden kann.

Vorzugsweise werden Entspiegelungsschichten mit Siliziumoxid als Basis verwendet. Solche Schichten, die beispielsweise durch Sputtern, PECVD oder ein Sol-Gel-Verfahren hergestellt werden, weisen aber einen Brechungsindex von etwa 1,46 auf, wenn sie als dichte Schichten aufgebracht werden, und sind damit so gestaltet als Entspiegelung insbesondere für eisenarmes Kalknatronglas, wie es beispielsweise als Deckglas für Photovoltaikanwendungen eingesetzt wird, nicht geeignet.

Eine optimale Einschichtentspiegelung sollte einen Brechungsindex von etwa 1,22 aufweisen. Einen solchen niedrigen Brechwert kann man mit herkömmlichen dichten Beschichtungsmaterialien nicht mehr erreichen, vielmehr muß man hierfür poröse Schichten aufbringen bzw. durch eine geeignete Nachbehandlung erzeugen, so beschrieben beispielsweise in der deutschen Offenlegungsschrift DE 102005007825 A1, bei denen es zu einer Mischung aus dem Beschichtungsmaterial und Luft kommt, wodurch der effektive Brechungsindex des Beschichtungsmaterials erniedrigt wird. Eine solche Beschichtung wird zweckmäßigerweise nach dem Sol-Gel-Verfahren hergestellt. Zudem bietet die Flüssigbeschichtung eine kostengünstige Möglichkeit zur Beschichtung auch großer Substrate. Solche porösen Beschichtungen können auf verschiedene Weise hergestellt werden. So ist bekannt, eine poröse Beschichtung durch partikuläre, wäßrige oder alkoholische SiO₂-Sole herzustellen. Allerdings zeigt sich bei diesen Schichten oft eine schlechte mechanische Beständigkeit, insbesondere eine schlechte Abriebfestigkeit.

Weiterentwicklungen dieses Ansatzes umfassen verschiedene Methoden zur Optimierung der Abriebfestigkeit wie beispielsweise die Verwendung eines partikulären anorganischen-organischen Hydridsols, beschrieben in der DE 19918811 A1, eine Optimierung der Einbrandbedingungen, beschrieben in der DE 19828231 A1, oder die Verwendung zweier unterschiedlicher Korngrößenfraktionen, beschrieben in der US 0258929 A. Auf vorstehend genannte gattungsbildende Dokumente wird vollumfänglich Bezug genommen und der Offenbarungsgehalt dieser Dokumente vollumfänglich zum Gegenstand dieser Anmeldung gemacht.

In der US 0258929 A und der DE 10051724 A1 ist beschrieben, dass die poröse Sol-Gel-Schicht während des thermischen Vorspannens eingebrannt wird, was die Schichthärte noch besonders erhöhen soll. Auf den Offenbarungsgehalt dieser Dokumente wird ebenfalls vollumfänglich verwiesen.

Untersuchungen poröser Sol-Gel-Schichten auf Borosilikatglas haben gezeigt, daß die Abriebfestigkeit einer solchen Beschichtung noch schlechter sein kann als auf Kalknatronglas (siehe z.B. Proceedings of SPIE-The International Society for Optical Engineering (1989), 1038(Meet. Isr. Opt. Eng., 6th, 1988), 326-36 oder Eur. J. Glass Sei. Technol. A, Oct. 2006 (47), 153-156).

Versuche, auch auf Borosilikatglas eine gute Abriebfestigkeit zu erhalten, liegen zum einen darin, durch einen nachträglichen Tauchschritt in eine Lösung von Natrium die Schicht zu härten oder durch Zusatz beispielsweise von Phosphor die Natriumdiffusion zu fördern. Neben der Erhöhung sowohl der Abriebfestigkeit als auch des Brechwertes spielt Natrium allerdings auch bei der Alterung der Schichten eine Rolle. Die Untersuchung der Alterung ist für diese Einschichtentspiegelungen besonders von Bedeutung, da in der Solarindustrie lange Garantiezeiten von 20 Jahren und mehr üblich sind. Wie sich in Untersuchungen derzeit auf dem Markt befindlicher Einschichtentspiegelungen auf Basis poröser SiO₂-Schichten zeigt, weisen diese Schichten in den für ein Solarmodul relevanten Belastungsfällen wie Damp Heat Test (85°C, 85% relativer Luftfeuchte) nach DIN 61215 nur eine sehr schlechte Beständigkeit auf. Hier kommt es bereits nach kurzer Zeit, oft schon nach wenigen Tagen, zum Auftreten von Trübungen und damit verbunden zu deutlichen Transmissionseinbußen.

Der Artikel Z. Qingna, D. Yuhong, W. Peng, Z. Xiujian: "Ce02-Ti02/Si02 anti-reflecting and UV-shielding doublefunctional films coated on glass substrates using sol-gel method", JOURNAL OF RARE EARTH, Bd. 25, Juni 2007 (2007-06), Seiten 64-67, P022934129, zeigt eine poröse Entspiegelungsschicht, unter welcher sich ein Wechselschichtsystem befindet, das als UV-Filter dient.

Der Artikel J.C. Debsikdar: "Deposition of gradient-index antirefelctive coating: An approach based on ultrastructure processing", JOURNAL OF NON-CRYSTALLINE SOLIDS, Bd. 91, 1987, Seiten 262-270, XP008103090, zeigt eine AntireflexSchicht, welche als Gradientenschicht ausgebildet ist.

### Aufgabe der Erfindung:

Demgegenüber ist es Aufgabe der Erfindung, die genannten Nachteile des Standes der Technik zumindest zu reduzieren.

Insbesondere ist es Aufgabe der Erfindung, ein abriebfestes, umweltbeständiges Verbundmaterial und/oder eine abriebfeste und gleichzeitig umweltbeständige poröse SiO₂-Beschichtung mit einer guten Entspiegelungswirkung beziehungsweise einer guten Transmissionserhöhung in einem für eine Solarzelle relevanten Wellenlängenbereich bereit stellen zu können.

### Zusammenfassung der Erfindung:

Die Aufgabe der Erfindung wird bereits durch ein Substrat, ein Verbundmaterial sowie durch ein Verfahren zum Herstellen eines Verbundmaterials nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Substrat mit zumindest einer Sol-Gel-Schicht, bei welchem zumindest eine Barriereschicht vorhanden ist. Die Barriereschicht ist zwischen der zumindest einen Sol-Gel-Schicht und dem Substrat angeordnet.

Es hat sich in überraschender Weise herausgestellt, dass eine Barriereschicht, welche unter der Sol-Gel-Schicht angeordnet ist, die Umweltbeständigkeit des so hergestellten Verbundmaterials erheblich erhöht. Es können insbesondere Ausblühungen und Eintrübungen des Glases über einen langen Zeitraum fast vollständig verhindert werden.

Unter einer Barriereschicht im Sinne der Erfindung wird eine Schicht verstanden, welche die Diffusion, insbesondere von Natrium und/oder Wasser reduziert. Vorzugsweise wird die Diffusion von Natrium und/oder Wasser um zumindest 30%, besonders bevorzugt 80% reduziert.

Neben einer Barriereschicht im klassischen Sinne zählen im Sinne dieser Erfindung als Barriereschichten auch an zum Beispiel durch Auslaugung an Natrium verarmte Schichten oder Schichten mit einer Getterwirkung für Natrium.

Insbesondere ist es auch denkbar, die Barriereschicht durch Auslaugung des Substrats herzustellen, beispielsweise über ein Ätzverfahren Alkali-Metalle im oberflächennahen Bereich des Substrates zu entfernen. Es ist nunmehr zu vermuten, dass die Ausblühungen in bekannten Verbundmaterialien mit einer Einschicht-Entspiegelungsschicht in erster Linie nicht auf eine Zerstörung der Entspiegelungsschicht zurückzuführen sind, sondern dass Glaskorrosion des unter der Entspiegelungsschicht befindlichen Substratglases die Trübungen und Ausblühungen im Glas verursacht.

Unter einer Barriereschicht kann somit auch eine Korrosionsschutzschicht verstanden werden, welche Glaskorrosion des Substratglases verhindert.

Als Substrat wird gemäß der Erfindung ein Kalk-Natron-Glas , insbesondere ein vorzugsweise eisenarmes Kalk-Natron-Glas verwendet.

Die Barriereschicht umfasst vorzugsweise ein Metalloxid oder Halbmetalloxid. Insbesondere ist eine Barriereschicht vorgesehen, welche im Wesentlichen aus Siliziumoxid besteht. Alternativ kommen aber auch Titanoxid oder Zinnoxid in Betracht.

Die Barriereschicht ist gemäß der Erfindung derart dünn ausgebildet, dass sie nicht optisch aktiv ist und hat eine Dicke zwischen 5 und 50 nm , bevorzugt zwischen 10 und 35 nm.

Bei einer bevorzugten Ausführungsform der Erfindung umfasst die Sol-Gel-Schicht Nanopartikel, insbesondere Glasnanopartikel. Vorzugsweise werden Nanopartikel verwendet, welche überwiegend aus Siliziumoxid bestehen. Die mittlere Größe der Partikel beträgt vorzugsweise zwischen 1 und 100, bevorzugt zwischen 3 und 70 und besonders bevorzugt zwischen 60 und 30 nm. Es hat sich herausgestellt, dass mit einem Sol-Gel-Verfahren, bei welchem dem Sol nanopartikuläres Siliziumoxid zugesetzt wird, eine poröse Entspiegelungsschicht mit niedrigem Brechwert und hoher Abriebfestigkeit bereit gestellt werden kann.

Gemäß der Erfindung wird die Barriereschicht mittels Flammpyrolyse oder mittels eines PVD- oder CVD-Verfahrens aufgebracht. Es hat sich gezeigt, dass sich auf diese Weise eine dichte Schicht mit hoher Barrierewirkung einfach erzeugen lässt.

Die Sol-Gel-Schicht ist gemäß der Erfindung als poröse Einschicht-Entspiegelungsschicht ausgebildet und weist einen Brechungsindex von weniger als 1,35, bevorzugt von weniger als 1,32 und besonders bevorzugt von weniger als 1,30 auf.

Vorzugsweise ist die Barriereschicht im Wesentlich frei von Natrium.

Die Erfindung betrifft des Weiteren ein Verbundmaterial, welches ein Substrat, insbesondere ein Glassubstrat umfasst. Weiter weist das Verbundmaterial eine poröse Entspiegelungsschicht, insbesondere eine poröse Einschicht-Entspiegelungsschicht auf. Gemäß der Erfindung umfasst das Verbundmaterial zumindest eine Barriereschicht, welche zwischen dem Substrat und der Entspiegelungsschicht angeordnet ist.

Ein derartiges Verbundmaterial, welches aus den bereits oben dargestellten Gründen überraschenderweise eine hohe Umweltbeständigkeit hat, eignet sich insbesondere in Verbindung mit Kalknatronglas für Photovoltaikanwendungen.

Die Barriereschicht ist vorzugsweise im Wesentlichen als Siliziumoxidschicht ausgebildet. Die Entspiegelungsschicht wird vorzugsweise mit einem Sol-Gel-Verfahren aufgebracht.

Durch die Erfindung kann ein Verbundmaterial bereit gestellt werden, welches zwischen 450 und 800 nm eine Transmission von mindestens 85 %, bevorzugt von mindestens 90 % und besonders bevorzugt von mindestens 95 % aufweist.

Als Substrat für das Verbundmaterial wird dabei vorzugsweise ein preiswert erhältliches Kalk-Natron-Glas verwendet. Aber auch die Verwendung anderer Glassorten sowie die Verwendung von Kunststoffen ist möglich.

Durch UV-Strahlung blockierende Schichten können beispielsweise elektronische Bauteile in Solarreceivern vor UV-Strahlung geschützt werden.

Bei einer Weiterbildung der Erfindung ist die poröse Entspiegelungsschicht hydrophob ausgebildet.

Hydrophobe Eigenschaften können beispielsweise durch den Zusatz von Nanopartikeln erzielt werden.

Bei einer bevorzugten Ausführungsform der Erfindung wird ein Substrat verwendet, welches einen Anteil von Natriumoxid von mindestens 2, vorzugsweise 3 und besonders bevorzugt 10 Gewichtsprozent aufweist. Insbesondere können preiswerte Kalk-Natron-Gläser verwendet werden.

Die Entspiegelungsschicht ist wischfest ausgebildet, so dass das insbesondere als Solarglas genutzte Verbundmaterial auf mechanisch gereinigt werden kann. Insbesondere ist die Entspiegelungsschicht nach DIN 58196-5 wischfest.

Bei einer bevorzugten Ausführungsform der Erfindung hat die Entspiegelungsschicht einen Porositätsgrad zwischen 5 und 60, vorzugsweise zwischen 20 und 40 % (geschlossene Porosität).

Die Sol-Gel-Schicht kann auf besonders einfache Weise mittels eines Tauchverfahrens, aber alternativ auch mittels Spincoatings, Fluten, Sprühen, Rakeln, Schlitzgießen, Streichen oder mittels Rolecoating aufgetragen werden.

Für eine optimale Entspiegelungswirkung beträgt kann die mittlere Porengröße der porösen Entspiegelungsschicht 1 bis 50, vorzugsweise 2 bis 10 nm betragen.

Bei einer Ausführungsform der Erfindung kann die Barriereschicht auch eine dichte Sol-Gel-Schicht umfassen. Auch mittels eines Sol-Gel-Verfahrens ist es möglich, dichte Schichten mit einer guten Barrierewirkung auf besonders einfache und preiswerte Weise aufzubringen.

Die Dicke der Entspiegelungsschicht beträgt bei einer bevorzugten Ausführungsform der Erfindung zwischen 30 und 500, vorzugsweise zwischen 50 und 200, besonders bevorzugt zwischen 100 und 150 nm.

Das erfindungsgemäße Verbundmaterial eignet sich insbesondere für alle Arten von Solaranwendungen, bei denen eine hohe Transmission im sichtbaren Bereich gewünscht ist, wie Photovoltaik, Solarkollektoren, insbesondere Solarreceiver, und Photobioreaktoren. Auch für Gewächshäuser, Anlagen zur Wasseraufbereitung wie Detoxifizierung und Desinfektion sowie für Entsalzungsanlagen eignet sich die Erfindung.

Des Weiteren betrifft die Erfindung ein Verfahren zur Herstellung eines Verbundmaterials, wobei ein Substrat, insbesondere ein Glassubstrat, mit zumindest einer Entspiegelungsschicht beschichtet wird. Gemäß der Erfindung wird zwischen der zumindest einen Entspiegelungsschicht und dem Substrat zumindest eine Barriereschicht aufgebracht. Im Sinne der Erfindung können aber auch noch weitere Zwischenschichten Teil des so hergestellten Verbundmaterials sein.

Weiter ist es im Sinne der Erfindung nicht zwingend, dass die Schichten an definierten Grenzflächen ineinander übergehen. Es ist vielmehr, je nach Herstellungsverfahren, auch denkbar, ein Gradientenschichtsystem zu erzeugen.

So ist insbesondere auch denkbar, durch Variation der Prozessparameter, beispielsweise bei einem PVD- oder CVD-Verfahren eine im Wesentlichen Siliziumoxid enthaltende dichte Barriereschicht aufzubringen, welche in eine poröse Entspiegelungsschicht übergeht.

Ein Verfahren zum Aufbringen poröser Glasschichten mittels eines PVD-Verfahrens ist beispielsweise aus der deutschen Offenlegungsschrift DE 10 2005 044 522 "Verfahren zum Aufbringen einer porösen Glasschicht" bekannt.
Auf den Offenbarungsgehalt dieses Dokumentes wird vollumfänglich Bezug genommen.

Alternativ und bevorzugt wird die Entspiegelungsschicht aber mittels eines Sol-Gel-Verfahrens aufgebracht.

Bei einer Weiterbildung der Erfindung wird dem partikulären SiO₂-Sol eine organische Siliziumverbindung, insbesondere Tetramethoxysilan, Triethoxymethylsilan oder Tetraethoxysilan zugesetzt.

Auf überraschende Weise hat sich herausgestellt, dass der Zusatz einer derartigen organischen Siliziumverbindung zu einer wesentlich höheren mechanischen Beständigkeit der Entspiegelungsschicht führt.

Die organische Siliziumverbindung wird dabei vorzugsweise so dosiert, dass zwischen.2 und 50 %, bevorzugt zwischen 5 und 25 % und besonders bevorzugt zwischen 7 und 15 % des Siliziums der entstandenen Entspiegelungsschicht auf die zugesetzte organische Siliziumverbindung zurückgehen.

Die Temperatur zum Einbrennen der Schichten beträgt zwischen 400 und 750°C, bevorzugt zwischen 500 und 670°C.

Vorzugsweise wird die poröse Sol-Gel-Schicht auf ein Glassubstrat aufgebracht, welches vorgespannt wird. Das Vorspannen erfolgt vorzugsweise bei Einbrennen der Entspiegelungsschicht. So ist kein weiterer Verfahrensschritt für das Einbrennen der Entspiegelungsschicht erforderlich, sondern der Vorspannprozess kann zum Einbrennen der Entspiegelungsschicht genutzt werden.

Die Erfindung betrifft des Weiteren ein Verfahren zum Aufbringen einer vorzugsweise porösen Sol-Gel-Schicht, wobei vorzugsweise auf einem Glassubstrat zumindest eine Sol-Gel-Schicht aufgebracht wird, die einen siliziumorgänischen Precursor enthält.

Gemäß der Erfindung erfolgt die Hydrolyse und Kondensation im sauren Milieu.

Es hat sich gezeigt, dass durch eine Hydrolyse und Kondensation, insbesondere im stark sauren Milieu, sich Strukturen bilden, die wesentlich haft- und abriebfester sind als bei bekannten Verfahren zum Ausbilden von Entspiegelungsschichten basierend auf einem partikulären Sol und/oder einem siliziumorganischen Precursor.

Bei einer Weiterentwicklung der Erfindung wird einem partikulären Sol eine Aluminium-Verbindung zugegeben, so daß eine Aluminiummatrix oder eine teilweise mit Aluminium dotierte Matrix entsteht, die zu einer wesentlich höheren mechanischen und chemischen Beständigkeit der Entspiegelungsschicht führt.

Gemäß einer bevorzugten Ausführungsform der Erfindung wird als erste Schicht eine Natrium-Barriereschicht auf das Glas aufgebracht. Um die optischen Eigenschaften möglichst wenig zu beeinflußen, wird als Barriereschicht optimalerweise SiO₂ verwendet und möglichst dünn aufgetragen, generell eignen sich aber auch andere Materialien mit einer guten Na-Barriere als Barriereschicht, zum Beispiel TiO₂ oder SnO₂ oder Al₂O₃. Als Beschichtungsverfahren eignen sich im Prinzip alle Verfahren, mit denen über eine große Fläche homogene Schichten aufgetragen werden können, beispielsweise CVD-Verfahren wie thermische oder Plasma-CVD oder PVD-Verfahren wie Sputtern. Besonders bevorzugt ist eine Auftragung der Barriereschicht mittels Flammpyrolyse.

Durch die Barriereschicht wird möglicherweise die Diffusion von Natrium in die Schicht verhindert oder signifikant reduziert. Dadurch wird aber zumeist die Abriebfestigkeit beziehungsweise generell die mechanische Festigkeit der partikelbasierten porösen SiO₂-Beschichtungen reduziert.

Um eine gute mechanische Festigkeit zu gewährleisten, kann dem Sol ein weiteres Material, insbesondere ein Metalloxid bildendes Material, zugegeben werden, das als Härter wirkt. Beispielsweise kann Aluminium als Härter zugesetzt werden. Damit steigt allerdings wiederum der Brechungsindex, und die Effizienz der so hergestellten Schichten sinkt.

In überraschend einfacher Weise kann die mechanische Festigkeit der resultierenden Schicht auch deutlich erhöht werden, indem eine organische Siliziumverbindung dem partikulären SiO₂-Sol zugesetzt wird. Als organische Siliziumverbindung eignen sich insbesondere Tetraethoxysilan oder Triethoxymethylsilan, aber auch andere eine Alkoxy-Silan-Verbindungen wie Tetramethoxysilan können verwendet werden. Besonders bevorzugt kommen etwa 10% des insgesamt in der Schicht vorhandenen Si0₂ durch die siliziumorganische Verbindung, 90% kommen aus dem partikulären SiO₂-Sol.

Hydrolyse und Kondensation des siliziumorganischen Precursors erfolgen bevorzugt nicht im neutralen bzw. schwach basischen pH-Bereich, sondern im stark sauren Milieu. Im stark sauren Milieu führt Hydrolyse und Kondensation zur Ausbildung von polymerischen SiO₂-Strukturen. Es liegen also nicht zwei Partikelfraktionen vor, vielmehr wird eine Beschichtung erzeugt, bei der die SiO₂-Partikeln in eine polymerisch verknüpfte SiO₂-Matrix eingebettet sind. Diese polymerische SiO₂-Matrix scheint zu einer besonders haft- und abriebfesten Beschichtung zu führen, obwohl die Na-Diffusion durch eine unterliegende Barriereschicht eingeschränkt ist.

Obwohl die Poren zwischen den einzelnen SiO₂-Partikeln auf diese Weise teilweise mit polymerischem SiO₂ verfüllt sind, werden immer noch ausreichende Brechwerte um etwa 1,31 erreicht, womit eine signifikante Leistungssteigerung von Photovoltaik-Modulen oder weiteren Produkten für Solaranwendungen wie beispielsweise Solarreceivern oder - kollektoren sowie Photobioreaktoren möglich ist. Der Einbrand der so erhaltenen Schichten kann in einem separaten Temperschritt z.B. bei 550°C lh erfolgen. Es ist aber auch möglich und in den meisten Fällen auch zweckmäßiger, wenn der Einbrand während des thermischen Vorspannprozesses erfolgt. Werden solche Schichten den für ein Solarmodul relevanten Belastungstests unterzogen, so zeigt sich im Vergleich mit herkömmlichen Schichten eine deutlich verbesserte Langzeitbeständigkeit. Insbesondere tritt im Wesentlichen keine Glaskorrosion auf.

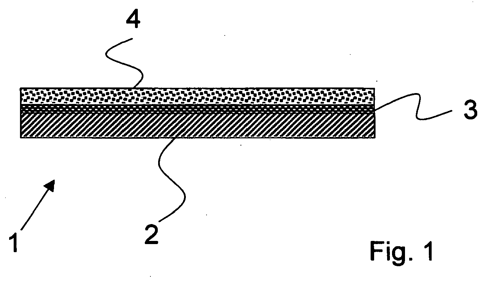

Bezug nehmend auf Fig. 1 soll anhand eines schematisch dargestellten Ausführungsbeispiels ein Verbundmaterial 1 näher erläutert werden. Das Verbundmaterial 1 umfasst ein Substrat 2. In diesem Ausführungsbeispiel handelt es sich um ein eisenarmes Kalknatronglas.

Auf dem Substrat 2 wurde mittels eines Flammpyrolyse-Verfahrens eine im Wesentlichen aus Siliziumoxid bestehende Barriereschicht 3 aufgebracht.

Auf die Barriereschicht schließlich ist mittels eines Sol-Gel-Verfahrens eine poröse Entspiegelungsschicht 4 aufgebracht.

Überraschender Weise konnte durch die unter der Entspiegelungsschicht 4 angeordnete Barriereschicht 3 die Wetterbeständigkeit des Verbundmaterials 1 wesentlich erhöht werden.

## Patentansprüche

1. Verbundmaterial, umfassend ein als Kalk-Natron-Glas ausgebildetes Glassubstrat mit einer porösen als Sol-Gel-Schicht ausgebildeten Entspiegelungsschicht mit einem Brechungsindex von weniger als 1,35,
und bei welchem zwischen der porösen Entspiegelungsschicht und dem Glassubstrat zumindest eine Barriereschicht mit einer Dicke von 5 bis 50 nm vorhanden ist, welche flammpyrolytisch oder mittels eines PVD- oder CVD-Verfahrens aufgebracht ist.

2. Verbundmaterial nach dem vorstehenden Anspruch, **dadurch gekennzeichnet, dass** die Barriereschicht eine Dicke zwischen 10 und 35 nm aufweist.

3. Verbundmaterial nach einem der vorstehenden Ansprüche, **dadurch gekennzeichnet, dass** die Sol-Gel-Schicht Partikel in einer Größe zwischen 1 und 100 nm, bevorzugt zwischen 3 und 70 nm und besonders bevorzugt zwischen 6 und 30 nm umfasst.

4. Verbundmaterial nach einem der vorstehenden Ansprüche, **dadurch gekennzeichnet, dass** die Sol-Gel-Schicht einen Brechungsindex von weniger als 1,32, bevorzugt von weniger als 1,30 aufweist.

5. Verbundmaterial nach einem der vorstehenden Ansprüche, **dadurch gekennzeichnet, dass** die Barriereschicht als Natrium-Barriereschicht ausgebildet ist.

6. Verbundmaterial nach einem der vorstehenden Ansprüche, **dadurch gekennzeichnet, dass** die poröse Entspiegelungsschicht hydrophob ausgebildet ist.

7. Verbundmaterial nach einem der vorstehenden Ansprüche, **dadurch gekennzeichnet, dass** das Substrat einen Anteil an Natriumoxid von mindestens 2, vorzugsweise 3 und besonders bevorzugt 10 Gewichts-% aufweist.

8. Verbundmaterial nach einem der vorstehenden Ansprüche, **dadurch gekennzeichnet, dass** die Enspiegelungsschicht einen Porositätsgrad zwischen 5 und 60 %, vorzugsweise zwischen 20 und 40 % aufweist.

9. Verbundmaterial nach einem der vorstehenden Ansprüche, **dadurch gekennzeichnet, dass** die mittlere Porengröße der porösen Entspiegelungsschicht 1 bis 50, vorzugsweise 2 bis 10 nm beträgt.

10. Verfahren zur Herstellung eines Verbundmaterials,
wobei ein als Kalk-Natron-Glas ausgebildetes Glassubstrat mit zumindest einer porösen als Sol-Gel-Schicht ausgebildeten Einschicht-Entspiegelungsschicht mit einem Brechungsindex von weniger als 1,35 beschichtet wird, **dadurch gekennzeichnet, dass** zwischen der zumindest einen Entspiegelungsschicht und dem Substrat zumindest eine Barriereschicht mit einer Dicke zwischen 5 und 50 nm flammpyrolytisch oder mittels eines PVD- oder CVD-Verfahrens aufgebracht wird.

11. Verfahren zur Herstellung eines Verbundmaterials nach dem vorstehenden Anspruch, **dadurch gekennzeichnet, dass** die Sol-Gel-Schicht und/oder Barriereschicht bei einer Temperatur zwischen 400 und 750 °C, bevorzugt zwischen 600 und 670 °C eingebrannt werden.

12. Verfahren zur Herstellung eines Verbundmaterials nach einem der Ansprüche 10 bis 11, **dadurch gekennzeichnet, dass** die poröse Sol-Gel-Schicht auf ein Glassubstrat aufgebracht wird, wobei das Glassubstrat vorgespannt wird, insbesondere beim Einbrennen der Entspiegelungsschicht.

13. Gehäuse für ein Solarmodul, **dadurch gekennzeichnet, dass** das Gehäuse ein Verbundmaterial nach einem der Ansprüche 1 bis 9 umfasst.

14. Wand oder Deckenverglasung eines Gebäudes, insbesondere Fenster, **dadurch gekennzeichnet, dass** die Wand oder Deckenverglasung ein Verbundmaterial nach einem der Ansprüche 1 bis 9 umfasst.

## Claims

1. A composite material, comprising a glass substrate made of soda-lime glass and having a porous antireflective layer in form of a sol-gel layer with a refractive index of less than 1.35, and wherein between the porous antireflective layer and the glass substrate, at least one barrier layer is arranged, which has a thickness from 5 to 50 nm and was deposited by flame pyrolysis or by a PVD or CVD process.

2. The composite material according to the preceding claim, **characterized in that** the barrier layer has a thickness between 10 and 35 nm.

3. The composite material according to any of the preceding claims, **characterized in that** the sol-gel layer comprises particles of a size between 1 and 100 nm, preferably between 3 and 70 nm, and more preferably between 6 and 30 nm.

4. The composite material according to any of the preceding claims, **characterized in that** the sol-gel layer has a refractive index of less than 1.32, preferably less than 1.30.

5. The composite material according to any of the preceding claims, **characterized in that** the barrier layer is a sodium barrier layer.

6. The composite material according to any of the preceding claims, **characterized in that** the porous antireflective layer is hydrophobic.

7. The composite material according to any of the preceding claims, **characterized in that** the substrate has a content of sodium oxide of at least 2, preferably 3, and more preferably 10 percent by weight.

8. The composite material according to any of the preceding claims, **characterized in that** the antireflective layer has a degree of porosity between 5 and 60 %, preferably between 20 and 40 %.

9. The composite material according to any of the preceding claims, **characterized in that** the average pore size of the porous antireflective layer is from 1 to 50, preferably from 2 to 10 nm.

10. A method for producing a composite material, wherein a glass substrate made of soda-lime glass is coated with a porous single-layer antireflective layer in form of a sol-gel layer with a refractive index of less than 1.35, **characterized in that** between the at least one antireflective layer and the substrate at least one barrier layer is deposited with a thickness between 5 and 50 nm, by flame pyrolysis or by a PVD or CVD process.

11. The method for producing a composite material according to the preceding claim, **characterized in that** the sol-gel layer and/or the barrier layer is/are baked at a temperature between 400 and 750 °C, preferably between 600 and 670 °C.

12. The method for producing a composite material according to any of claims 10 to 11, **characterized in that** the porous sol-gel layer is applied onto a glass substrate, and the glass substrate is toughened, in particular during baking of the antireflective layer.

13. A housing for a solar module, **characterized in that** the housing comprises a composite material according to any of claims 1 to 9.

14. A wall or ceiling glazing of a building, in particular a window, **characterized in that** the wall or ceiling glazing comprises a composite material according to any of claims 1 to 9.

## Revendications

1. Matériau composite, comprenant un substrat en verre prenant la forme d'un verre sodocalcique, doté d'une couche anti-reflet poreuse prenant la forme d'une couche sol-gel ayant un indice de réfraction inférieur à 1,35, et au moins une couche barrière ayant une épaisseur de 5 à 50 nm et déposée par voie de pyrolyse à la flamme ou au moyen d'un procédé PVD ou CVD étant présente entre la couche anti-reflet poreuse et le substrat en verre.

2. Matériau composite selon la revendication précédente, **caractérisé en ce que** la couche barrière présente une épaisseur entre 10 et 35 nm.

3. Matériau composite selon l'une des revendications précédentes, **caractérisé en ce que** la couche sol-gel comprend des particules d'une taille située entre 1 et 100 nm, de préférence entre 3 et 70 nm et de manière particulièrement préférée entre 6 et 30 nm.

4. Matériau composite selon l'une des revendications précédentes, **caractérisé en ce que** la couche sol-gel présente un indice de réfraction inférieur à 1,32, de préférence inférieur à 1,30.

5. Matériau composite selon l'une des revendications précédentes, **caractérisé en ce que** la couche barrière prend la forme d'une couche barrière sodique.

6. Matériau composite selon l'une des revendications précédentes, **caractérisé en ce que** la couche anti-reflet poreuse est conçue pour être hydrophobe.

7. Matériau composite selon l'une des revendications précédentes, **caractérisé en ce que** le substrat présente une proportion d'oxyde de sodium d'au moins 2, de préférence de 3, et de manière particulièrement préférée de 10 % en poids.

8. Matériau composite selon l'une des revendications précédentes, **caractérisé en ce que** la couche anti-reflet présente un degré de porosité entre 5 et 60 %, de préférence entre 20 et 40 %.

9. Matériau composite selon l'une des revendications précédentes, **caractérisé en ce que** la taille moyenne des pores de la couche anti-reflet poreuse est de 1 à 50, de préférence de 2 à 10 nm.

10. Procédé de fabrication d'un matériau composite, dans lequel un substrat en verre prenant la forme d'un verre sodocalcique est revêtu avec au moins une couche anti-reflet monocouche poreuse prenant la forme d'une couche sol-gel ayant un indice de réfraction inférieur à 1,35, **caractérisé en ce qu'**au moins une couche barrière ayant une épaisseur de 5 à 50 nm est déposée par voie de pyrolyse à la flamme ou au moyen d'un procédé PVD ou CVD entre l'au moins une couche anti-reflet et le substrat.

11. Procédé de fabrication d'un matériau composite selon la revendication précédente, **caractérisé en ce que** la couche sol-gel et/ou la couche barrière sont calcinées à une température située entre 400 et 750°C, de préférence entre 600 et 670°C.

12. Procédé de fabrication d'un matériau composite selon l'une des revendications 10 à 11, **caractérisé en ce que** la couche sol-gel poreuse est appliquée sur un substrat en verre, le substrat en verre étant précontraint, en particulier lors de la calcination de la couche anti-reflet.

13. Boîtier pour un module photovoltaïque, le boîtier étant **caractérisé en ce qu'**il comprend un matériau composite selon l'une des revendications 1 à 9.

14. Paroi ou verre de recouvrement d'un bâtiment, en particulier fenêtre, la paroi ou le verre de recouvrement étant **caractérisé en ce qu'**il comprend un matériau composite selon l'une des revendications 1 à 9.
